(19) Europäisches Patentamt / European Patent Office / Office européen des brevets

(11) **EP 2 365 620 B1**

(12) **EUROPEAN PATENT SPECIFICATION**

(45) Date of publication and mention
of the grant of the patent:
**06.05.2015 Bulletin 2015/19**

(51) Int Cl.:
***H02M 1/42*** *(2007.01)*

(21) Application number: **10425059.2**

(22) Date of filing: **09.03.2010**

(54) **System and method for controlling a power-converter device, in particular for recharging a rechargeable battery from the electric-power mains**

System und Verfahren zur Steuerung einer Stromwandlervorrichtung, insbesondere zum Aufladen einer wiederaufladbaren Batterie aus dem Stromnetz

Système et procédé pour commander un dispositif de conversion de puissance, en particulier pour recharger une batterie rechargeable sur le secteur

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**14.09.2011 Bulletin 2011/37**

(73) Proprietor: **C.R.F. Società Consortile per Azioni 10043 Orbassano (Torino) (IT)**

(72) Inventors:
• **Reggio, Paolo**
  **10043 Orbassano (IT)**
• **Catona, Giuseppe**
  **10043 Orbassano (IT)**

(74) Representative: **Nannucci, Lorenzo et al Studio Torta S.p.A.
Via Viotti, 9
10121 Torino (IT)**

(56) References cited:
**WO-A1-2008/089541     GB-A- 2 287 843
US-A- 5 404 092     US-A- 5 844 399
US-B1- 6 169 669**

• **JOEL TURCHI: "Power Factor Correction Stages Operating in Critical Conduction Mode" ON SEMICONDUCTOR APPLICATION NOTE, no. AND8123/D, AND8123/, September 2003 (2003-09), pages 1-18, XP002599562**

## Description

The present invention relates to a system and a method for controlling a power-converter device, in particular for recharging a rechargeable battery starting from the electric-power mains; the ensuing treatment will make explicit reference, without this implying any loss of generality, to the use of the power converter device in automotive applications.

Known to the art are electric vehicles equipped, for being driven, with electric batteries (so-called "traction batteries") of a rechargeable type. In particular, "hybrid vehicles" are known provided with a powertrain comprising an internal-combustion engine with a small engine displacement, and a dual dry-clutch transmission (DDCT), which integrates an electric machine operating as electric motor/generator and can be activated, amongst other functions, for starting the internal-combustion engine, as substitute for the starter motor.

The hybrid powertrain is, for example, able to perform the following functions: start and stop of the engine (Engine Stop & Start) through the electric traction motor; launch and slow motion (Launch & Creep) in electrical mode; gear shift in "economy" mode (Economy Gear Shifting); braking with energy recovery (Regenerative Braking); increase in torque obtained electrically (Electric Torque Boost).

The traction battery can be charged directly by the electric-power mains (which supplies, for example, an a.c. supply voltage of 220-230 Vac at a frequency of 50 Hz). In this case, a power-converter device is provided for recharging the battery at a high voltage, which is able to implement an appropriate power-factor correction (PFC), in such a way that the power factor assumes values not lower than a given threshold (for example, 0.97) so as to limit the transmission losses and improve the characteristics of voltage regulation on the load (in a known way, the power factor is expressed as the ratio between the active power and the apparent power, the so-called $\cos\Phi$ factor, and is an indication of the amount of reactive power on the load).

The power-converter device basically includes, at its input, an AC/DC converter with active power-factor correction (PFC stage), and, at its output, a step-down or buck DC/DC converter (voltage-reducer stage). The PFC stage operates in such a way as to stabilize on a storage capacitor, set between the PFC stage and the voltage-reducer stage, a d.c. voltage, of a value (for example, 400 V) higher than the maximum peak value of the rectified mains-supply voltage (for example, 340 V), whereas the voltage-reducer stage is supplied with this d.c. voltage and scales it down to the target voltage at which it is intended to recharge the traction battery, with a value, for example, of between 170 V and 280 V.

In a known way, the purpose of the PFC stage is to guarantee an absorption of current that is substantially sinusoidal and in phase with the voltage supplied by the electric-power mains in order for the $\cos\Phi$ factor,

i.e., the absorption quality factor, not to be less than a given threshold value, for example, 0.97; the storage capacitor at output from the PFC stage is typically sized as a function of a given oscillation (or ripple) that can be tolerated on the output voltage, at the maximum output power. The minimum capacitance $C_{MIN}$ of the storage capacitor, required for maintaining a ripple $\Delta V$ on the output voltage $V_{OUT}$, can, for example, be determined by applying the following relations:

$$\Delta E = \frac{2}{\pi \cdot f} \cdot P_{LOAD}$$

$$C_{MIN} = \frac{\Delta E}{V_{OUT} \cdot \Delta V}$$

where f is the mains-supply frequency, $\Delta E$ is the sinusoidal excess power supplied by the source that is accumulated by the capacitor, and $P_{LOAD}$ is the power on the load at the output, having a d.c. value.

For example, if it is assumed that the desired output power is 2 kW at the frequency of 100 Hz (rectified mains-supply frequency) and a voltage ripple of 30 V is tolerated, it follows immediately that the minimum capacitance $C_{MIN}$ required for the storage capacitor is particularly high, for example, of the order of millifarads (mF); this value is moreover the higher, the lower the value of the voltage ripple $\Delta V$ allowed on the output.

Even though electrolytic capacitors today enable high capacitance values in spaces that are, all things considered, small, a capacitance of the order of millifarads, taking into account also the high operating voltage required (around 400 V), the high operating temperature, and the high current ripple that stresses this component, entails, however, the need for a very large capacitor, the location of which can prove problematical in applications, such as automotive ones, where size optimization frequently plays a fundamental role. Furthermore, it is evident that a storage capacitor with high capacitance entails high production costs.

AC/DC converters with a PFC stage and a subsequent step-down converter are described, for example, in WO 2008 089 541 and US 5844399, where voltage rippies are reduced by PWM.

The aim of the present invention is to solve, either totally or in part, the problems highlighted above, and in particular to provide a power-converter device for recharging an electric battery, where the storage capacitor has reduced dimensions and encumbrance.

According to the present invention, a system, as well as a corresponding method, for controlling a power-converter device are consequently provided, substantially as defined in the annexed claims.

For a better understanding of the present invention, a preferred embodiment thereof is now described, purely by way of non-limiting example, with reference to the attached drawings, wherein:

- Figure 1 shows a circuit diagram of a power-converter device, implementing the present invention;
- Figure 2 shows a block diagram of a control stage of the power-converter device of Figure 1; and
- Figures 3a and 3b show graphs of control signals generated by the control stage of Figure 2.

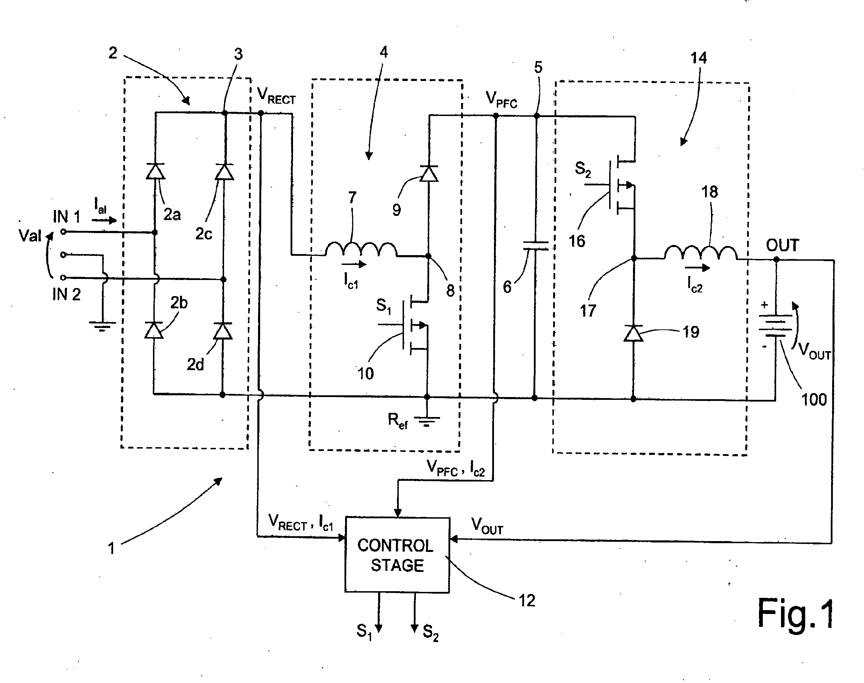

As shown in Figure 1, a power-converter device, designated as a whole by 1, has a first input IN1 and a second input IN2, which are designed to be connected, respectively, to the positive pole and to the negative pole of the electric-power mains, which supplies, for example, a supply voltage Val, of an a.c. sinusoidal type, having an effective value of 220-230 $V_{eff}$ at the supply frequency of 50 Hz, and a corresponding supply current $I_{al}$, which also has a sinusoidal waveform. In particular, the power-converter device 1 is used for recharging a battery 100, for example, a traction battery of a hybrid vehicle, which is to be charged starting from the electric-power mains (consequently providing in this case a battery-charger device).

The power-converter device 1 comprises a rectifier stage 2, in particular of the double-half-wave type, comprising four rectifier diodes 2a-2d (appropriately connected as illustrated in Figure 1, in a way in itself known and hence not described in detail), which are connected to the first input IN1 and to the second input IN2 and are designed to supply, between a first internal node 3 and a reference line internal to the power-converter device 1, designated by Ref, a rectified voltage $V_{RECT}$, for example, including only positive half-waves, at a frequency that is twice that of the supply voltage Val, which, in the example, is 100 Hz.

The power-converter device 1 further comprises: a power-factor-correction (PFC) stage 4, which has its input connected to the first internal node 3 and supplies at output, on a high-voltage node 5, via an appropriate control action (as described in detail hereinafter), a stabilized voltage $V_{PFC}$, of a d.c. type, with a value of, for example, 400 V; and a storage capacitor 6, which is connected between the high-voltage node 5 and the reference line Ref and receives across its terminals the stabilized voltage $V_{PFC}$.

In greater detail, the PFC stage 4 has a circuit configuration of a voltage-booster type, operates at a high switching frequency $f_c$, for example, of 50 kHz, and comprises: a first inductive element 7, connected between the first internal node 3 and a second internal node 8; a first diode 9, having its anode terminal connected to the second internal node 8 and its cathode terminal connected to the high-voltage node 5; and a first switch element 10, for example, made by a MOSFET, which is connected between the second internal node 8 and the reference line Ref and receives a first control signal S1 (typically, a square-wave signal) from a control stage 12 (which is illustrated schematically here and will be described in detail hereinafter).

In use, closing of the first switch element 10 enables an accumulation of energy in the first inductive element 7, via a first charging current $I_{c1}$; this energy then flows to the storage capacitor 6 through direct biasing of the first diode 9, following upon opening of the first switch element 10. Through an appropriate variation of the duty cycle of the first control signal S1 (in the way that will be described in detail hereinafter), the control stage 12 is thus able to control charging of the storage capacitor 6 and transfer of power from the electric-power mains to the high-voltage node 5.

The power-converter device 1 further comprises a voltage-adapter stage 14, in particular a DC/DC stage of a "buck" (voltage reducer) type, having its input connected to the high-voltage node 5, and an output OUT (which moreover constitutes the output of the same power-converter device 1) designed to be connected to the battery 100. The voltage-adapter stage 14 supplies on the output OUT an output voltage $V_{OUT}$, i.e., a target voltage at which it is desired to charge the battery 100, for example, comprised between 170 V and 280 V, typically comprised between 240 V and 280 V, generated via an appropriate reduction of the stabilized voltage $V_{PFC}$ (present on the storage capacitor 6).

In greater detail, the voltage-adapter stage 14, which operates at the same switching frequency $f_c$ as the PFC stage 4, in the example 50 kHz, comprises: a second switch element 16, for example, constituted by a MOSFET, which is connected between the high-voltage node 5 and a third internal node 17 and receives a second control signal S2 (typically a square-wave signal) from the control stage 12; a second inductive element 18, connected between the third internal node 17 and the output OUT; and a second diode 19, having its cathode terminal connected to the third internal node 17 and its anode terminal connected to the reference line Ref.

In use, closing of the second switch element 16 brings about transfer at output of an appropriate second charging current $I_{c2}$ to the battery 100, through the second inductive element 18. Instead, opening of the same second switch element 16 brings about interruption of transfer of the charging current to the battery 100 and consequent recirculation of the current through the second diode 19. Through an appropriate variation of the duty cycle of the second control signal S2 (in the way that will be described in detail hereinafter), the control stage 12 is thus able to control charging of the battery 100 and transfer of power from the storage capacitor 6 to the same battery 100.

One aspect of the present invention envisages a particular implementation of the control stage 12, such as to enable a sensible reduction in the capacitance, as well as in the dimensions, of the storage capacitor 6 as compared to solutions of a known type. As will be clarified in detail in what follows, this reduction of dimensions is rendered possible by particular considerations on the power flows that traverse the various stages of the power-converter device 1, and moreover by an appropriate synchronization of the switchings of the first switch element 10 and of the second switch element 16 of the PFC stage 4 and, respectively, of the voltage-adapter stage 14.

In particular, as shown schematically in Figure 1, the control stage 12 receives at input, as electrical signals on the basis of which the control action (described in detail hereinafter) is to be carried out, appropriate measurements of: the rectified voltage $V_{RECT}$; the first charging current $I_{cl}$ present on the input of the PFC stage 4 (which is to circulate through the first inductive element 7); the stabilized voltage $V_{PFC}$ across the storage capacitor 6; the second charging current $I_{c2}$ present on the input of the voltage-adapter stage 14 (which is to circulate through the second inductive element 18); and the output voltage $V_{OUT}$ present on the terminals of the battery 100. Based on the value of these electrical signals, the control stage 12 supplies at output, as described in detail hereinafter, a first duty-cycle value D1 and a second duty-cycle value D2 and the corresponding control signals S1, S2, for pulse-width modulation (PWM) control of the first switch element 10 and, respectively, of the second switch element 16 of the PFC stage 4 and of the voltage-adapter stage 14, controlling selective switching thereof at desired time intervals.

In general, the control stage 12 of the power-converter device 1 is essentially based upon four digital control loops, nested in twos. Each of the power stages (i.e., the PFC stage 4 and the voltage-adapter stage 14) is in fact controlled in switching (using the PWM technique) in a so-called "average current mode", by sampling the first charging current $I_{cl}$ or the second charging current $I_{c2}$ in the first inductive element 7 or second inductive element 18 at the switching frequency $f_c$, in the example 50 kHz. For controlling each of the aforesaid power stages there are envisaged: an external voltage loop, designed to compare the voltage present at output from the respective power stage with a desired (or target) voltage, to supply at output a desired current requirement; and an internal current loop, for example, with a crossover frequency of around 5 kHz (i.e., at least ten times smaller than the sampling frequency $f_c$), which is designed to compare the desired current requirement determined by the error amplifier of the external voltage loop with the respective measurement of current (namely, with the value of the first charging current $I_{cl}$ or second charging current $I_{c2}$), for supplying at output a duty-cycle requirement with which the switch element of the respective power stage is to be operated; the crossover frequency of the external voltage loop is, for example, lower than that of the internal current loop by at least one decade.

The control stage 12 also comprises a further control loop (which will not be described in detail herein in so far as it is of a type in itself known), and in particular a power loop external to the aforesaid voltage and current control loops, which is designed to prevent an absorption of power from the electric-power mains higher than a certain threshold level, for example, of 2 kW (so as to prevent overloads). This further control loop, by acting on the current requirement desired for the second charging current $I_{c2}$, causes the power absorbed on the inputs IN1, IN2 of the power-converter device 1 to be limited; whence there is a power available on the load that depends upon the intrinsic efficiency of the supply stage. In fact, by limiting the power that can be drawn upstream, and since the overall efficiency of the power-converter device 1 is equal to the product of the individual efficiency values of the PFC stage 4 and of the voltage-adapter stage 14, the power that can be effectively delivered at output on the battery 100 is a function of the efficiency values of the individual power stages.

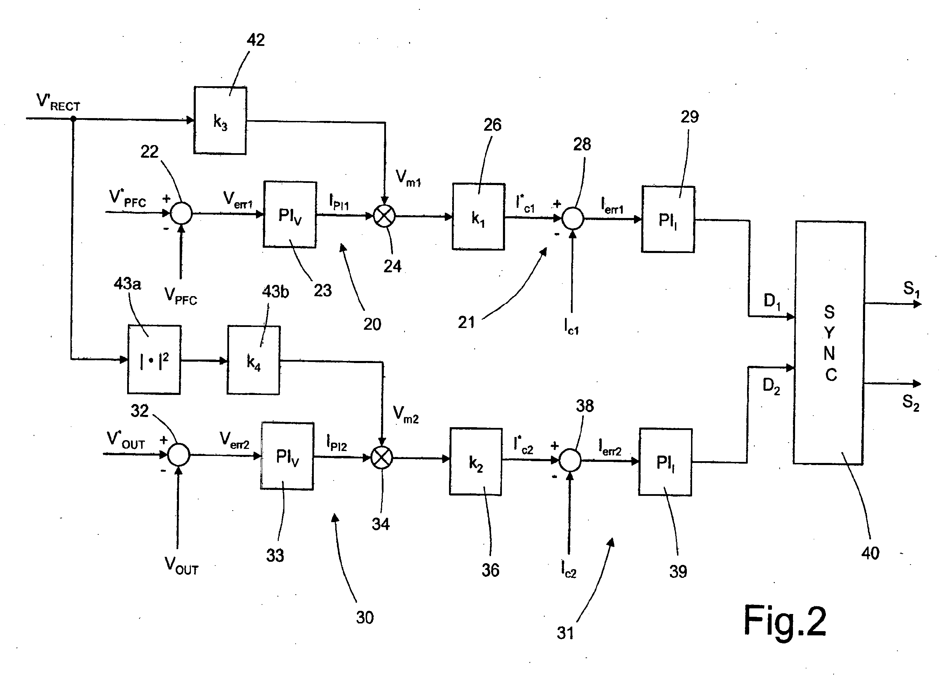

In greater detail, with reference to Figure 2, the control stage 12, which is implemented, for example, by a microprocessor, a microcontroller, or a similar computing and digital-processing tool, comprises a first control branch formed by a first voltage control loop 20 and by a first current control loop 21, which are nested into one another and which operate in conjunction for generating the first duty-cycle value D1 on the basis of which the first control signal S1 to be supplied to the first switch element 10 of the PFC stage 4 is to be generated.

In particular, the first voltage control loop 20 comprises: a first subtractor block 22, which computes the difference between a voltage value desired for the stabilized voltage across the storage capacitor 6, designated by $V_{PFC}^*$ and the value effectively measured (via an appropriate sampling) of the stabilized voltage $V_{PFC}$ itself, for generating at output a first error voltage $V_{err1}$; a first proportional-integrative (PI) controller block 23, operating in voltage, which is connected to the output of the first subtractor block 22 and is designed to generate a first required compensation current $Ip_{l1}$ as a function of the first error voltage $V_{err1}$; a first multiplier block 24, which computes the product of the compensation current $Ip_{l1}$ and a first modulation signal $V_{m1}$ deriving from the normalization of the rectified mains-supply voltage (as will be clarified hereinafter) and generates an appropriate output signal; and a first scaling block 26, which multiplies the signal at output from the first multiplier block 24 by a first scaling factor $k_1$ in order to generate a first desired value, designated by $I_{c1}^*$, for the first charging current $I_{cl}$, having a sinusoidal trend or pattern with mean value corresponding to the compensation current $Ip_{l1}$. It should be noted in this regard that the first desired value $I_{c1}^*$ is a function, in particular, of the first modulation signal $V_{m1}$ and has a sinusoidal trend corresponding thereto.

The first current control loop 21 comprises: a second subtractor block 28, which computes the difference between the aforesaid first desired value $I^*_{c1}$ and the value effectively measured (via an appropriate sampling) of the first charging current $I_{cl}$, for generating at output a first error current $I_{err1}$; and a second proportional-integrative (PI) controller block 29, operating in current, which is connected to the output of the second subtractor block 28 and is designed to generate the first duty-cycle value D1 for PWM control of the first switch element 10 of the PFC stage 4.

In a way in itself known, the control action, which is carried out in particular by the first and second PI controller blocks 23, 29 causes the stabilized voltage $V_{PFC}$ and the first charging current $I_{cl}$ to assume the respective desired values, minimizing, that is, the respective first error voltage $V_{err1}$ and first error current $I_{err1}$.

The second control branch, which operates in parallel to the first control branch, is formed by a second voltage control loop 30 and by a second current control loop 31, nested into one another, which operate in conjunction for generating the second duty-cycle value D2 on the basis of which the second control signal S2 to be supplied to the second switch element 16 of the voltage-adapter stage 14 is to be generated.

In particular, the second voltage control loop 30 comprises: a third subtractor block 32, which computes the difference between a voltage value desired for the output voltage across the battery 100, designated by $V^*_{OUT}$ and the value effectively measured (via an appropriate sampling) of the output voltage $V_{OUT}$ itself, for generating at output a second error voltage $V_{err2}$; a third proportional-integrative (PI) controller block 33, operating in voltage, which is connected to the output of the third subtractor block 32 and is designed to generate a second required compensation current $I_{PI2}$ as a function of the second error voltage $V_{err2}$; a second multiplier block 34, which computes the product of the compensation current $I_{PI2}$ and a second modulation signal $V_{m2}$ obtained by normalizing the waveform of the squared rectified input voltage (in practice having a trend corresponding to a function $\sin^2$ normalized to 1, as will be clarified hereinafter) and generates an appropriate output signal; and a second scaling block 36, which multiplies the signal at output from the second multiplier block 34 by a second scaling factor $k_2$ for generating a second desired value, designated by $I^*_{c2}$, for the second charging current $I_{c2}$, having waveform with a shape corresponding to the envelope of a $\sin^2$ function, with mean value equal to the compensation current $I_{PI2}$. The second desired value $I^*_{c2}$ is a function in particular of the second modulation signal $V_{m2}$, and has a waveform corresponding thereto.

The second current control loop 31 in turn comprises: a fourth subtractor block 38, which computes the difference between the aforesaid second desired value $I^*_{c2}$ and the value effectively measured (via an appropriate sampling) of the second charging current $I_{c2}$, for generating at output a second error current $I_{err2}$; and a fourth proportional-integrative (PI) controller block 39, operating in current, which is connected to the output of the fourth subtractor block 38 and is designed to generate the second duty-cycle value D2 for PWM control of the second switch element 16 of the voltage-adapter stage 14.

Also in this case, the control action, which is carried out by the third and fourth PI controller blocks 33, 39 causes the output voltage $V_{OUT}$ and the second charging current $I_{c2}$ to assume the desired values, minimizing, that is, the respective second error voltage $V_{err2}$ and second error current $I_{err2}$.

The control stage 12 further comprises a synchronization block 40, which receives at input the first and second duty-cycle values D1, D2 and generates, as a function of these duty-cycle values D1, D2, the first and second control signals S1, S2 for the first and second switch elements 10, 16 in the power-converter device 1, both constituted, for example, by appropriate square-wave pulse trains.

A first aspect of the present invention envisages obtaining a significant reduction in the capacitance of the storage capacitor 6 via an appropriate choice of the values of the first and second modulation signals $V_{m1}$ and $V_{m2}$ carried out on the basis of considerations linked to the power flows that travel through the stages of the power-converter device 1.

In particular, the PFC stage 4 operates in such a way that the current absorbed from the electric-power mains is substantially a perfect sinusoid and has a sinusoidal trend corresponding to the mains-supply voltage (in such a way as to reduce the phase offset between voltage and current, and hence the $\cos\Phi$ factor). Consequently, the power absorbed from the electric-power mains has a trend (or envelope, or waveform) corresponding to a $\sin^2$ (i.e., a trend corresponding to the profile of a squared sinusoid).

On the hypothesis that the stabilized voltage $V_{PFC}$ is substantially constant, for example, 400 V (which is a desired condition, in so far as it allows having a storage capacitor 6 with a low capacitance), but for the various efficiency values of the stages, it is sufficient for the current absorbed by the input of the voltage-adapter stage 14 to have also an envelope corresponding to a $\sin^2$, in order to obtain a substantial matching between the input power and output power of the PFC stage 4.

As regards the output current of the voltage-adapter stage 14, the fact that it also has the pattern of a $\sin^2$ does not represent a problem, given that the battery 100 (for example, the traction battery of a hybrid vehicle) is not affected by the fact that the charge occurs with an impulsive current, instead of with a d.c. current.

These current requirements (which correspond to a sinusoidal trend for the first charging current $I_{cl}$ and to a squared sinusoidal trend for the second charging current $I_{c2}$) are obtained in the control stage 12 by means of an appropriate selection of the first and second modulation signals $V_{m1}$ and $V_{m2}$.

Both of the modulation signals $V_{m1}$, $V_{m2}$ are obtained starting from the input mains-supply voltage (in such a way that they are both synchronous with the supply voltage $V_{al}$), in particular starting from the rectified voltage $V_{RECT}$ (in the case of the second modulation signal $V_{m2}$, being appropriately squared), multiplying it by appropriate scaling factors.

In the digital implementation that is described here (see again Figure 2), the rectified voltage $V_{RECT}$ is sampled and normalized to one (in a way in itself known, by dividing the value of the sample each time acquired by the peak value assumed by the rectified voltage $V_{RECT}$ itself at the previous cycle, and tolerating possible minor variations between one cycle and the next), to obtain a normalized value $V'_{RECT}$.

Then, the normalized value $V'_{RECT}$ squared if needed, is multiplied by the appropriate scaling factors that depend upon the desired current requirement to obtain a desired evolution that is sinusoidal or corresponding to a $\sin^2$ function.

As regards the mean values, $\overline{V}(t)$ and $\overline{V^2}(t)$, of a sinusoid and of a squared sinusoid, respectively, the following relations in fact apply:

$$V(t) = V_{PK} \cdot \left| \sin(2 \cdot \pi \cdot 50 \cdot t) \right|$$

$$\overline{V}(t) = \frac{2}{\pi} \cdot V_{PK}$$

$$\overline{V}^2(t) = \frac{1}{2} \cdot V_{PK}$$

where V(t) is the generic sinusoidal signal (in particular having a frequency of 50 Hz), and $V_{PK}$ is the corresponding peak value thereof (sampled value). For example, if it is desired to supply a mean current of 20 A on the load, instead of supplying it as a d.c. signal, it is possible to supply it either with a sinusoidal waveform having a peak value of 31.4 A, or with a waveform corresponding to the envelope of a $\sin^2$ function having a peak value of 40 A.

In detail (see again Figure 2), in the first control branch, the normalized value $V'_{RECT}$ of the rectified voltage $V_{RECT}$ is multiplied by a third scaling factor $k_3$, in particular 2/n, in a third scaling block 42 to obtain the first modulation signal $V_{m1}$.

In the second control branch, the normalized value $V'_{RECT}$ of the rectified voltage $V_{RECT}$ is first subjected to an operation of squaring in a squaring block 43a, and then multiplied by a fourth scaling factor $k_4$, in particular 1/2, in a fourth scaling block 43b, to obtain the second modulation signal $V_{m2}$.

In the control stage 12, the first scaling factor $k_1$ moreover corresponds to the inverse of the third scaling factor $k_3$ (hence being equal to n/2), whereas the second scaling factor $k_2$ corresponds to the inverse of the fourth scaling factor $k_4$ (hence being equal to 2); in this way, it is possible to compare the desired values of current $(I_{c1}^*, \quad I_{c2}^*)$ with the sampled values ($I_{c1}$ $I_{c2}$).

Consequently, in the current control loops it is obtained, as desired, that the first current value $I_{c1}^*$ desired for the current that flows through the first inductive element 7 has a sinusoidal trend with the desired mean value (defined by the compensation current $Ip_{I1}$, and the second current value $I_{c2}^*$ desired for the current that flows through the second inductive element 17 has a trend corresponding to a $\sin^2$, with a respective desired mean value (defined by the compensation current $I_{PI2}$) -

It is thus advantageously possible to guarantee a current absorption that is practically sinusoidal at the input, with consequent power factor of the order of 0.99, and to reduce considerably the dimensions of the storage capacitor 6.

In accordance with a second aspect of the present invention, the synchronization block 40 is configured in such a way as to provide a substantial synchronism (or, in any case, so as to define a mutual timing) between the switchings of the first and second control signals S1, S2 (both being square-wave signals, which have one and the same switching period $T_c$) generated starting from the first and second duty-cycle values D1, D2.

The present applicant has in fact realized that the ripple effect of the stabilized voltage $V_{PFC}$ on the storage capacitor 6 is considerably reduced in the case where it is possible to operate in such a way that the voltage-adapter stage 14 absorbs power (the condition in which the second switch element 16 is closed) substantially in the same time interval in which the PFC stage 4 charges the storage capacitor 6 (the condition in which the first switch element 10 is open); in particular, in this case the ripple effect is drastically reduced, given that there do not occur substantial accumulations and subsequent releases of energy in the storage capacitor 6.

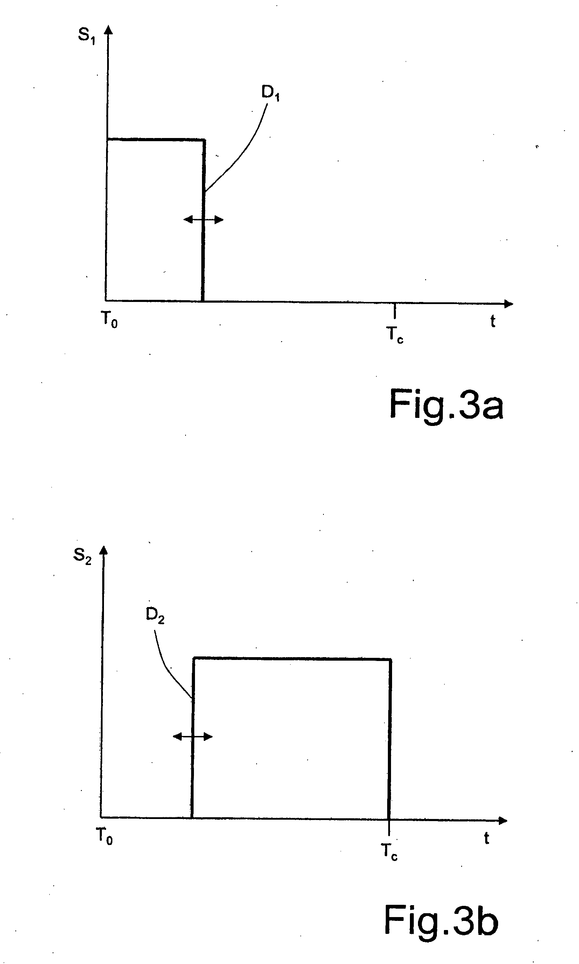

As shown in Figure 3a, the synchronization block 40 generates for this purpose the first control signal $S_1$ in such a way that the high portion of the signal (for example corresponding to the closing state of the first switch element 10), the duration of which is determined by the first duty-cycle value D1, corresponds to an initial portion of the switching period $T_c$ (considered starting from an initial instant $T_0$). Instead, as shown in Figure 3b, the synchronization block 40 generates the second con-

trol signal $S_2$ in such a way that the high portion of the signal (for example, corresponding once again to the closing state of the second switch element 16), the duration of which is determined by the second duty-cycle value D2, corresponds to an end portion of the same switching period $T_c$. In this way, as it is evident from the comparative analysis of the aforesaid Figures 3a and 3b, the portion of the switching period $T_c$ in which both of the switch elements 10, 16 are in the closing state is minimized, and, instead, the portion of the same switching period $T_c$ in which the closing state of the first switch element 10 corresponds to the opening state of the second switch element 16 is maximized, and vice versa.

It follows that substantially for the entire duration of the switching period $T_c$ (or in any case for a significant portion thereof, according to the duty-cycle values D1, D2), there occurs a direct transfer of energy from the PFC stage 4 to the voltage-adapter stage 14, minimizing the amount of energy stored in the storage capacitor 6 and consequently the effect of ripple across the same storage capacitor 6. As it is clear, this situation repeats cyclically, at each successive switching period $T_c$.

In other words, PWM modulators that generate the control signals S1, S2 (included, in a way not illustrated, within the synchronization block 40), instead of operating independently, are "interlaced", or synchronized, in order to obtain a substantial effect of improvement in regard to the characteristics of the storage capacitor 6, due to the fact that the power flow from the input to the output of the power-converter device 1 is not substantially interrupted within each switching period $T_c$; consequently, the storage capacitor 6 has the sole task of absorbing the excess power or of supplying the deficit thereof, and consequently can have a lower capacitance and smaller dimensions.

The advantages that the control system and the corresponding control method afford emerge clearly from the foregoing discussion.

In any case, it is once again emphasized that the solutions described, regarding control of the power flows within the power-converter device 1 and synchronization of the control signals S1, S2 for control in switching of the corresponding power stages (PFC stage 4 and voltage-adapter stage 14), taken individually and/or in conjunction (in this case giving rise to a synergistic effect), enable a marked reduction of the voltage ripple across the storage capacitor 6. Consequently, the same storage capacitor 6 can be designed with a markedly lower capacitance, and hence can have smaller dimensions and lower costs as compared to traditional solutions; for example, the present applicant has verified the possibility of obtaining a reduction to 1/10 of the capacitance required, and a corresponding size reduction.

This considerable decrease in the dimensions and in the production costs, which is not, however, at the expense of the performance, proves particularly advantageous for automotive applications, for example, for use in a battery-charger device of a hybrid vehicle for recharging the corresponding traction battery starting from the electric-power mains.

Finally, it is clear that modifications and variations may be made to what has been described and illustrated herein, without thereby departing from the scope of the present invention, as defined in the annexed claims.

For example, it is clear that the values of the voltages and of the currents previously indicated for the power-converter device 1 are to be understood as being provided merely by way of non-limiting indication. In particular, the control system and method described apply in a similar way in the case where the supply voltage $V_{al}$ has different characteristics (for example has an effective voltage of 110 V at a frequency of 60 Hz), the stabilized voltage on the storage capacitor 6 being in any case higher than the maximum output voltage $V_{OUT}$ required on the load.

Furthermore, it is clear that the control solution described previously finds advantageous application also in non-automotive contexts, in all those situations in which it is advantageous to obtain a reduction of the dimensions of the storage capacitor in a power-converter device (in particular, operating starting from the electric-power mains).

## Claims

1. A system for controlling a power-converter device (1), the power-converter device (1) comprising: a power-factor-correction stage (4), having an input (IN1, IN2) designed to receive a supply voltage (Val) and an output (5) connected to a capacitive storage element (6), and configured so as to supply a stabilized voltage ($V_{PFC}$) on said capacitive storage element (6) as a function of said supply voltage (Val); and a voltage-adapter stage (14), having a respective input (5) connected to said capacitive storage element (6) and a respective output (OUT) designed to be connected to a load (100), and configured so as to supply an output voltage ($V_{OUT}$) on said load (100) starting from said stabilized voltage ($V_{PFC}$); wherein said power-factor-correction stage (4) comprises a first switch element (10) that can be operated so as to control transfer of a first electric power from said input (IN1, IN2) to said capacitive storage element (6), and said voltage-adapter stage (14) comprises a second switch element (16) that can be operated so as to control transfer of a second electric power from said capacitive storage element (6) to said output (OUT),

characterized by comprising a control stage (12), operatively coupled to said first switch element (10) and second switch element (16) and configured to control said first switch element (10) and second switch element (16) in such a way that said first and second electric powers have substantially matching

13      **EP 2 365 620 B1**      14

trends, i.e. envelopes or waveforms, both electric powers having a waveform defining a profile corresponding to a squared sinusoid ($sin^2$), and their corresponding currents ($I_{c1}$) and ($I_{c2}$) have a sinusoidal trend and, respectively, a squared sinusoidal trend, so that the load (100) receives an impulsive current, instead of a DC current.

2.   The system according to claim 1, wherein said supply voltage ($V_{a1}$) is a mains-supply voltage and said load (100) is a rechargeable electric battery; said stabilized voltage ($V_{PFC}$) having a first substantially constant value, and said output voltage ($V_{OUT}$) having a second substantially constant value, lower than said first value.

3.   The system according to any one of the preceding claims, wherein said power-factor-correction stage (4) comprises a first inductive element (7), having a first terminal coupled to said input (IN1, IN2) and a second terminal connected to said first switch element (10), and said voltage-adapter stage (14) comprises a second inductive element (18), having a respective first terminal connected to said second switch element (16) and a respective second terminal connected to said output (OUT); and wherein said control stage (12) comprises a first internal control loop (21) and a second internal control loop (31), configured so as to generate a first control signal (S1) and a second control signal (S2), respectively, for controlling said first switch element (10) and said second switch element (16), respectively, via control, respectively, of a first control current ($I_{c1}$), designed to flow in said first inductive element (7), and of a second control current ($I_{c2}$), designed to flow in said second inductive element (18); said first internal control loop (21) and said second internal control loop (31) being configured so as to cause said first control current ($I_{c1}$) and said second control current ($I_{c2}$) to assume, respectively, a first desired current value ($I_{c1}^{*}$) and a second desired current value ($I_{c2}^{*}$), such that said first and second electric powers assume said substantially corresponding trends.

4.   The system according to claim 3, wherein associated to said first desired current value ($I_{c1}^{*}$) is a sinusoidal trend of said first control current ($I_{c1}$), and associated to said second desired current value ($I_{c2}^{*}$) is a trend having the profile of a squared sinusoid ($sin^2$) of said second control current ($I_{c2}$).

5.   The system according to claim 3 or 4, wherein said control stage (12) is configured so as to implement a control in average current mode (ACM) of said first control current ($I_{c1}$) and said second control current ($I_{c2}$).

6.   The system according to any one of claims 3-5, wherein said first internal control loop (21) and said second internal control loop (31) are configured so as to: sample at a given sampling frequency ($f_c$) said first control current ($I_{c1}$) and, respectively, said second control current ($I_{c2}$), to obtain a first sampled current value and, respectively, a second sampled current value; compare said first sampled current value and, respectively, said second sampled current value with said first desired current value ($I_{c1}^{*}$) and said second desired current value ($I_{c2}^{*}$), to obtain, respectively, a first current error value ($I_{err1}$) and a second current error value ($I_{err2}$); and processing said first and second current error values ($I_{err1}$, $I_{err2}$) for generating, respectively, a first duty-cycle value (D1) and a second duty-cycle value (D2) for said first control signal (S1) and, respectively, said second control signal (S2).

7.   The system according to any one of claims 3-6, wherein said control stage (12) is configured so as to generate said first desired current value ($I_{c1}^{*}$) and, respectively, said second desired current value ($I_{c2}^{*}$) as a function of said supply voltage ($V_{al}$), in such a way that they both have a trend synchronous with said supply voltage ($V_{al}$).

8.   The system according to any one of claims 3-7, wherein said control stage (12) comprises a first external control loop (20) and a second external control loop (30), configured so as to cause said stabilized voltage ($V_{PFC}$) and, respectively, said output voltage ($V_{OUT}$) to assume, respectively, a first desired * voltage value ($V_{PFC}^{*}$) and a second desired voltage value ($V_{OUT}^{*}$) and so as to generate said first desired current value ($I_{c1}^{*}$) and, respectively, said second desired current value ($I_{c2}^{*}$).

9.   The system according to claim 8, wherein said first external control loop (20) and said second external control loop (30) are configured so as to: sample at a given sampling frequency ($f_c$) said stabilized voltage ($V_{PFC}$) and, respectively, said output voltage ($V_{OUT}$) to obtain a first sampled voltage value and, respectively, a second sampled voltage value; compare said first sampled voltage value and, respec-

8

tively, said second sampled voltage value with said first desired voltage value ( $V_{PFC}^*$ ) and said second desired voltage value ( $V_{OUT}^*$ ) , to obtain, respectively, a first voltage error value ($V_{err1}$) and a second voltage error value ($V_{err2}$); process said first and second voltage error values ($V_{err1}$, $V_{err2}$) for generating, respectively, a first required compensation current ($I_{PI1}$) and a second required compensation current ($I_{PI2}$); and process a product of said first compensation current ($I_{PI1}$) and, respectively, said second compensation current ($I_{PI2)}$ with a first modulation signal ($V_{m1}$) and, respectively, a second modulation signal ($V_{m2}$), for generating said first desired current value ( $I_{c1}^*$ ) and, respectively, said second desired current value ( $I_{c2}^*$ ) , a mean value of which corresponds to said first compensation current ($I_{PI1}$) and, respectively, said second compensation current ($I_{PI2}$).

10. The system according to claim 9, wherein said control stage (12) is configured so as to: generate said first modulation signal ($V_{m1}$) as the result of a product of a normalized value ($V_{RECT}$) of said rectified supply signal ($V_{RECT}$) with a first coefficient ($k_3$), so that associated to said first desired current value ( $I_{c1}^*$ ) is a sinusoidal pattern with mean value defined by said first required compensation current ($I_{PI1}$) ; and generate said second modulation signal ($V_{m2}$ ) as the result of a product of said normalized value ($V_{RECT}$) of said rectified supply signal ($V_{RECT}$), after being squared, with a second coefficient ($k_4$), so that associated to said second desired current value ( $I_{c2}^*$ ) is a squared-sinusoidal pattern, with mean value defined by said second required compensation current ($I_{PI2}$).

11. The system according to claim 10, wherein said first coefficient ($k_3$) is equal to 2/n, and said second coefficient ($k_4$) is equal to 1/2.

12. The system according to any one of the preceding claims, wherein said control stage (12) is configured so as to control switching of said first switch element (10) and second switch element (16) with a given switching period ($T_c$), and further comprises a synchronization block (40) configured so as to correlate with one another switching timings of said first switch element (10) and said second switch element (16).

13. The system according to claim 12, wherein said synchronization block (40) is configured in such a way as to increase a portion of said switching period ($T_c$) wherein corresponding to the supply of said first electric power to said capacitive storage element (6) by said power-factor-correction stage (4) is an absorption of said second electric power from said capacitive storage element (6) by said voltage-adapter stage (14), in such a way as to reduce a voltage ripple that is to be present on said capacitive storage element (6).

14. The system according to claim 13, wherein said control stage (12) is configured so as to generate a first control signal (S1) and, respectively, a second control signal (S2) for controlling said first switch element (10) and, respectively, said second switch element (16), having a first duty cycle (D1) and, respectively, a second duty cycle (D2), in such a way that within said switching period ($T_c$) there is an increase in the time interval in which to a first level of said first control signal (S1), associated to which is said supply of said first electric power to said capacitive storage element (6) by said power-factor-correction stage (4), there corresponds a second level of said second control signal (S2), associated to which is said absorption of said second electric power from said capacitive storage element (6) by said voltage-adapter stage (14).

15. The system according to claim 13 or 14, wherein said synchronization block (40) is configured in such way that said first control signal (S1) has said first level for a first portion of said switching period ($T_c$), corresponding to said first duty cycle (D1), starting from an initial instant ($T_0$) of said switching period ($T_c$), and said second control signal (S2) has said first level for a second portion of said switching period ($T_c$), corresponding to said second duty cycle (D2), starting from a final instant of said switching period ($T_c$), in such a way that said first and second portions have a reduced overlapping region.

16. A battery-charger device for recharging a battery (100) from the electric-power mains, comprising a power-converter device (1), and a system for controlling the power-converter device according to any of the preceding claims.

17. A method for controlling a power-converter device (1), said power-converter device (1) comprising: a power-factor-correction stage (4), having an input (IN1, IN2) designed to receive a supply voltage (Val) and an output (5) connected to a capacitive storage element (6), and configured so as to supply a stabilized voltage ($V_{PFC}$) on said capacitive storage element (6) as a function of said supply voltage (Val) ; and a voltage-adapter stage (14), which has a respective input (5) connected to said capacitive storage element (6) and a respective output (OUT) designed to be connected to a load (100), and is configured so as to supply an output voltage ($V_{OUT}$) on said load (100) starting from said stabilized voltage ($V_{PFC}$); wherein said power-factor-correction stage (4) comprises a first switch element (10) that can be operated so as to control a transfer of a first electric power from said input (IN1, IN2) to said capacitive storage element (6), and said voltage-adapter stage (14) comprises a second switch element (16) that can be operated so as to control a transfer of a second electric power from said capacitive storage element (6) to said output (OUT), **characterized by** comprising the step of controlling said first switch element (10) and second switch element (16) in such a way that said first and second electric powers have substantially matching trends, i.e. envelopes or waveforms, both electric powers having a waveform defining a profile corresponding to a squared sinusoid ($sin^2$), and their corresponding currents ($I_{c1}$) and ($I_{c2}$) have a sinusoidal trend and, respectively, a squared sinusoidal trend, so that the load (100) receives an impulsive current, instead of a DC current.

**Patentansprüche**

1. System zur Steuerung einer Stromwandlervorrichtung (1), wobei die Stromwandlervorrichtung (1) umfasst:

     eine Blindstromkompensationsstufe (4) mit einem Eingang (IN1, IN2), ausgelegt zum Empfangen einer Zufuhrspannung (Val) und einem Ausgang (5), der mit einem kapazitiven Speicherelement (6) verbunden ist, und derart konfiguriert, dass eine stabilisierte Spannung ($V_{PFC}$) dem kapazitiven Speicherelement (6) als eine Funktion der Zufuhrspannung (Val) zugeführt ist/wird; und eine Spannungsadapterstufe (14) mit einem jeweiligen Eingang (5), verbunden mit dem kapazitiven Speicherelement (6) und
     einem jeweiligen Ausgang (OUT), ausgelegt um verbunden zu werden mit einem Verbraucher (100), und derart konfiguriert, dass eine Ausgangsspannung ($V_{OUT}$) an den Verbraucher (100) geliefert ist/wird, ausgehend von der stabilisierten Spannung ($V_{PFC}$); bei welcher die Blindstromkompensationsstufe (4) ein erstes Schaltelement (10) umfasst, welches betätigt werden kann zum Steuern einer Übertragung einer ersten elektrischen Leistung von dem Eingang (IN1, IN2) zu dem kapazitiven Speicherelement (6), und bei welcher die Spannungsadapterstufen (14) ein zweites Schaltelement (16) umfasst, welches betätigt werden kann zum Steuern einer Übertragung einer zweiten elektrischen Leistung von dem kapazitiven Speicherelement (6) zu dem Ausgang (OUT), **dadurch gekennzeichnet dass** sie eine Steuerstufe (12) umfasst, wirkgekoppelt bezüglich dem ersten Schaltelement (10) und dem zweiten Schaltelement (16), und konfiguriert zum Steuern des ersten Schaltelementes (10) und des zweiten Schaltelementes (16), derart, dass die ersten und zweiten elektrischen Leistungen über im Wesentlichen passende oder übereinstimmende Neigungen, d. h. Umhüllende oder Wellenformen verfügen, wobei beide elektrischen Leistungen über eine Wellenform verfügen, ein Profil definierend, entsprechend einer Sinusquadratfunktion ($sin^2$), wobei deren entsprechende Ströme ($I_{C1}$) und ($I_{C2}$) jeweils über eine sinusförmige Neigung beziehungsweise über eine rechtecksinusförmige Neigung verfügen, so dass der Verbraucher (100) einen gepulsten Strom anstelle eines Gleichstromes empfängt.

2. System nach Anspruch 1, bei welchem die Zufuhrspannung ($V_{al}$) eine Hauptversorgungspannung ist und der Verbraucher (100) eine wiederaufladbare elektrische Batterie ist; wobei die stabilisierte Spannung ($V_{PFC}$) über einen ersten im wesentlichen konstanten Wert verfügt, und wobei die Ausgangsspannung ($V_{OUT}$) über einen zweiten im Wesentlichen konstanten Wert verfügt, welcher niedriger ist als der erste Wert.

3. System nach einem der vorangegangenen Ansprüche, bei welchem die Blindstromkompensationsstufen (4) ein erstes Induktivelement (7) enthält, aufweisend einen ersten Anschluss, der an den Eingang (IN1, IN2) gekoppelt ist und einen zweiten Anschluss, der mit dem ersten Schaltelement (10) verbunden ist, wobei die Spannungsadapterstufe (14) ein zweites Induktivelement (18) enthält, aufweisend einen jeweiligen ersten Anschluss, verbunden mit dem zweiten Schaltelement (16) und einem jeweiligen zweiten Anschluss, der mit dem Ausgang (OUT) verbunden ist; und bei welchem die Steuerstufe (12) einen ersten internen Steuerkreis (21) und einen zweiten internen Steuerkreis (31) enthält, konfiguriert um ein erstes Steuersignal (S1) und ein zweites Steuersignal (S2) jeweils zu generieren, zur Steuerung jeweils des ersten Schaltelementes (10) beziehungsweise des zweiten Schaltelements (16), vermittels Steuerung von jeweils einem ersten Steuerstrom ($I_{C1}$), ausgelegt um in dem ersten Induktivelement (7) zu fließen und einem zweiten Steuerstrom ($I_{C2}$), ausgelegt um in dem zweiten Induktivelement (18) zu fließen; wobei der ersten interne Steuerkreis (21) und der zweite interne Steuerkreis (31) ausgestaltet sind um den ersten Steuerstrom ($I_{C1}$) und den

19     **EP 2 365 620 B1**     20

zweiten Steuerstrom ($I_{C2}$) zu veranlassen jeweils anzunehmen einen ersten gewünschten Stromwert ($I^*_{C1}$) beziehungsweise einen zweiten gewünschten Stromwert ($I^*_{C2}$), derart, dass die ersten und zweiten elektrischen Leistungen die im Wesentlichen entsprechenden Neigungen oder Eigenschaften annehmen.

4. System nach Anspruch 3, bei welchem dem ersten gewünschten Stromwert ($I^*_{C1}$) eine sinusförmige Neigung oder Eigenschaft des ersten Steuerstromes ($I_{C1}$) zugeordnet ist, und bei welchem dem zweiten gewünschten Stromwert ($I^*_{C2}$) eine Neigung beziehungsweise Trend oder Eigenschaft mit dem Profil einer Sinusquadratform ($\sin^2$) des zweiten Steuerstromes ($I_{C2}$) zugeordnet ist/wird.

5. System nach Anspruch 3 oder 4, bei welchem die Steuerstufe (12) konfiguriert ist um einen Steuerungsmittelstrommodus (ACM) des ersten Steuerstromes ($I_{C1}$) und des zweiten Steuerstromes ($I_{C2}$) zu implementieren.

6. System nach einem der Ansprüche 3 bis 5, bei welchem der erste interne Steuerkreis (21) und der zweite interne Steuerkreis (31) konfiguriert sind um: Sampeln bei einer gegebenen Samplefrequenz ($f_c$) des ersten Steuerstromes ($I_{C1}$) beziehungsweise des zweiten Steuerstromes ($I_{C2}$), um einen ersten gesampelten Stromwert beziehungsweise einen zweiten gesampelten Stromwert zu erhalten; vergleichen des ersten gesampelten Stromwertes beziehungsweise des zweiten gesampelten Stromwertes mit dem ersten gewünschten Stromwert ($I^*_{C1}$) und dem zweiten gewünschten Stromwert ($I^*_{C2}$) zum Erhalten von jeweils einem ersten Stromfehlerwert ($I_{err1}$) und eines zweiten Stromfehlerwertes ($I_{err2}$); und verarbeiten der ersten und zweiten Stromfehlerwerte ($I_{err1}$, $I_{err2}$) zum Generieren jeweils eines ersten Lastzykluswertes (D1) und eines zweiten Lastzykluswertes (D2) für das erste Steuersignal (S1) beziehungsweise das zweite Steuersignal (S2).

7. System nach einem der Ansprüche 3 bis 6, bei welchem die Steuerstufe (12) konfiguriert ist um den ersten gewünschten Stromwert ($I^*_{C1}$) beziehungsweise den zweiten gewünschten Stromwert ($I^*_{C2}$) als eine Funktion der Zufuhrspannung ($V_{al}$) in solch einer Weise zu generieren, dass beide eine Neigung oder Eigenschaft synchron mit der Zufuhrspannung ($V_{al}$) aufweisen.

8. System nach einem der Ansprüche 3 bis 7, bei welchem die Steuerstufe (12) einen ersten externen Steuerkreis (20) und einen zweiten externen Steuerkreis (30) enthält, so ausgestaltet, um die stabilisierte Spannung ($V_{PFC}$) beziehungsweise die Ausgangsspannung ($V_{OUT}$) zu veranlassen jeweils anzunehmen einen ersten gewünschten Spannungswert ($V^*_{PFC}$) und einen zweiten gewünschten Spannungswert ($V^*_{OUT}$) und um den ersten gewünschten Stromwert ($I^*_{C1}$) beziehungsweise den zweiten gewünschten Stromwert ($I^*_{C2}$) zu generieren oder zu erzeugen.

9. System nach Anspruch 8, bei welchem der erste externe Steuerkreis (20) und der zweite externe Steuerkreis (30) konfiguriert sind zum: Sampeln bei einer gegebenen Samplefrequenz ($f_c$) der stabilisierten Spannung ($V_{PFC}$) beziehungsweise der Ausgangsspannung ($V_{OUT}$), zum Erhalten eines ersten gesampelten Spannungswertes beziehungsweise eines zweiten gesampelten Spannungswertes; Vergleichen des ersten gesampelten Spannungswertes beziehungsweise des zweiten gesampelten Spannungswertes mit dem ersten gewünschten Spannungswert ($V^*_{PFC}$) und dem zweiten gewünschten Spannungswert ($V^*_{OUT}$), zum Erhalten jeweils eines ersten Spannungsfehlerwertes ($V_{err1}$) und eines zweiten Spannungsfehlerwertes ($V_{err2}$); Verarbeiten der ersten und zweiten Spannungsfehlerwerte ($V_{err1}$, $V_{err2}$) zum Erzeugen oder Generieren von jeweils einem ersten erforderlichen Kompensationsstrom ($I_{PI1}$) und einem zweiten erforderlichen Kompensationsstrom ($I_{PI2}$); und verarbeiten eines Produktes des ersten Kompensationsstromes ($I_{PI1}$) beziehungsweise des zweiten Kompensationsstromes ($I_{PI2}$) mit einem ersten Modulationssignal ($V_{m1}$) beziehungsweise einem zweiten Modulationssignal ($V_{m2}$), um den ersten gewünschten Stromwert ($I^*_{C1}$) beziehungsweise den zweiten gewünschten Stromwert ($I^*_{C2}$) zu generieren, wobei ein Mittelwert davon dem ersten Kompensationsstrom ($I_{PI1}$) beziehungsweise dem zweiten Kompensationsstrom ($I_{PI2}$) entspricht.

10. System nach Anspruch 9, bei welchem die Steuerstufe (12) ausgestaltet ist, um: das erste Modulationssignal ($V_{m1}$) zu erzeugen als das Ergebnis eines Produktes eines normalisierten Weites ($\overline{V}_{RECT}$) des gleichgerichteten Zufuhrsignales ($V_{RECT}$) mit einem ersten Koeffizienten ($k_3$), so dass dem ersten gewünschten Stromwert ($I^*_{C1}$) ein sinusförmiges Muster mit Mittelwert, definiert durch den ersten erforderlichen Kompensationsstrom ($I_{PI1}$) zugeordnet ist/wird; und erzeugen des zweiten Modulationssignales ($V_{m2}$) als das Ergebnis eines Produktes des normalisierten Wertes ($\overline{V}_{RECT}$) des gleichgerichteten Zufuhrsignales ($V_{RECT}$) nach Quadratur oder Rechteckgestaltung, mit einem zweiten Koeffizienten ($k_4$), so dass dem zweiten gewünschten Stromwert ($I^*_{C2}$) eine Sinusquadratgestalt oder ein Sinusquadratmuster mit einem Mittelwert, definiert durch den zweiten erforderlichen Kompensationsstrom

**11**

(I$_{PI2}$) zugeordnet ist/wird.

11. System nach Anspruch 10, bei welchem der erste Koeffizient (k$_3$) gleich ist zu 2/$\pi$ und der zweite Koeffizient (k$_4$) gleich ist zu 1/2.

12. System nach einem der vorangegangenen Ansprüche, bei welchem die Steuerstufe (12) ausgestaltet ist zum Steuern des Schaltens des ersten Schaltelementes (10) und des zweiten Schaltelementes (16) bei einer gegebenen Schaltperiode (T$_C$) und weiterhin umfasst, einen Synchronisationsblock (40), konfiguriert um die Schaltzeiten oder Schaltgebungszeiten des ersten Schaltelementes (10) und des zweiten Schaltelementes (16) miteinander zu korrelieren.

13. System nach Anspruch 12, bei welchem der Synchronisationsblock (40) derart ausgestaltet ist, dass ein Abschnitt der Schaltperiode (T$_C$) erhöht oder angehoben ist/wird, wobei entsprechend zu der Zufuhr der ersten elektrischen Leistung zu dem kapazitiven Speicherelement (6), durch die Blindstromkompensationsstufe (4), eine Absorption der zweiten elektrischen Leistung von dem kapazitiven Speicherelement (6) durch die Spannungsadapterstufe (14) in solch einer Weise ist, dass Spannungsspitzen oder Spannungsrauschen, vorliegend an dem kapazitiven Speicherelement (6) reduziert ist/wird.

14. System nach Anspruch 13, bei welcher die Steuerstufe (12) konfiguriert ist zum Erzeugen eines ersten Steuersignals (S1) beziehungsweise eines zweiten Steuersignales (S2), zur Steuerung des ersten Schaltelementes (10) beziehungsweise des zweiten Schaltelementes (16), aufweisend einen ersten Lastzyklus (D1) beziehungsweise einen zweiten Lastzyklus (D2), derart, dass innerhalb der Schaltperiode (T$_C$) eine Erhöhung oder ein Anstieg in dem Zeitintervall vorliegt, in welchem einem ersten Pegel des ersten Steuersignales (S1), welchem die Zufuhr des ersten elektrischen Stromes zu dem kapazitiven Speicherelement (6) durch die Blindstromkompensationsstufe (4) zugeordnet ist, einem zweiten Level oder Pegel des zweiten Steuersignales (S2) entspricht, dem die Absorption der zweiten elektrischen Leistung von dem kapazitiven Speicherelement (6) durch die Spannungsadapterstufe (14) zugeordnet ist/wird.

15. System nach Anspruch 13 oder 14, bei welchem der Synchronisationsblock (40) derart ausgestaltet ist, dass das erste Steuersignal (S1) über einen ersten Pegel für einen ersten Abschnitt der Schaltperiode (T$_C$), entsprechend dem ersten Lastzyklus (D1), beginnend von einem anfänglichen Moment (T$_0$) der Schaltperiode (T$_C$) entspricht, und das zweite Steuersignal (S2) über einen ersten Pegel für einen zweiten Abschnitt der Schaltperiode (T$_C$) aufweist, entsprechend dem zweiten Lastzyklus (D2), beginnend von einem Endmoment der Schaltperiode (T$_C$), derart, dass die ersten und zweiten Abschnitte einen reduzierten Überlappungsbereich aufweisen.

16. Batterieladevorrichtung zum Wiederaufladen einer Batterie (100) von der elektrischen Hauptversorgung, umfassend eine Stromwandlervorrichtung (1) und ein System zum Steuern der Stromwandlervorrichtung gemäß einem der vorangegangenen Ansprüche.

17. Verfahren zur Steuerung einer Stromwandlervorrichtung (1), wobei die Stromwandlervorrichtung (1) umfasst: eine Blindstromkompensationsstufe (4) mit einem Eingang (IN1, IN2), ausgelegt zum Empfangen einer Zufuhrspannung (Val) und mit einem Ausgang (5), verbunden mit einem kapazitiven Speicherelement (6) und derart konfiguriert, dass eine stabilisierte Spannung (V$_{PFC}$) an das kapazitive Speicherelement (6), als eine Funktion der Zufuhrspannung (Val) zu liefern; und eine Spannungsadapterstufe (14), welche aufweist, einen jeweiligen Eingang (5), verbunden mit dem kapazitiven Speicherelement (6) und einen jeweiligen Ausgang (OUT), ausgelegt um verbunden zu werden mit einem Verbraucher oder einer Last (100) und ausgestaltet zum Zuführen einer Ausgangsspannung (V$_{OUT}$) zu der Last oder dem Verbraucher (100), ausgehend von der stabilisierten Spannung (V$_{PFC}$); wobei die Blindstromkompensationsstufe (4) ein erstes Schaltelement (10) enthält, welches betätigt werden kann zum Steuern einer Übertragung einer ersten elektrischen Leistung von dem Eingang (IN1, IN2) zu dem kapazitiven Speicherelement (6), und wobei die Spannungsadapterstufe (14) ein zweites Schaltelement (16) enthält, welches betätigt werden kann um eine Übertragung oder einen Transfer der zweiten elektrischen Leistung von dem kapazitiven Speicherelement (6) zu dem Ausgang (OUT) zu steuern, **dadurch gekennzeichnet, dass** der Schritt vorgesehen ist, des Steuerns des ersten Schaltelements (10) und des zweiten Schaltelements (16) derart, dass die ersten und zweiten elektrischen Leistungen im Wesentlichen passende oder übereinstimmende Neigungen oder Trends oder Eigenschaft, d.h. Umhüllende oder Wellenformen aufweisen, wobei beide elektrische Leistungen über eine Wellenform verfügen, definierend ein Profil entsprechend einer Sinusquadratform (sin$^2$), wobei deren entsprechende Ströme (I$_{C1}$) und (I$_{C2}$) eine sinusförmige Neigung oder Gestalt oder Eigenschaft beziehungsweise eine Sinusquadratneigung oder -trend oder -eigenschaft aufweisen, so dass der Verbraucher oder die Last (100) einen gepulsten Strom anstelle eines Gleichstromes empfängt oder erhält.

## Revendications

1. Système destiné à commander un dispositif de conversion de puissance (1), le dispositif de conversion de puissance (1) comprenant : un étage de correction de facteur de puissance (4), possédant une entrée (IN1, IN2) conçue pour recevoir une tension d'alimentation (Val) et une sortie (5) connectée à un élément de stockage capacitif (6), et configuré de manière à apporter une tension stabilisée ($V_{PFC}$) sur ledit élément de stockage capacitif (6) en fonction de ladite tension d'alimentation (Val) ; et un étage d'adaptation de tension (14), comportant une entrée respective (5) connectée audit élément de stockage capacitif (6) et une sortie respective (OUT) conçue pour être connectée à une charge (100), et configuré de manière à apporter une tension de sortie ($V_{OUT}$) sur ladite charge (100) en partant de ladite tension stabilisée ($V_{PFC}$) ; dans lequel ledit étage de correction de facteur de puissance (4) comprend un premier élément de commutation (10) qui peut être actionné de manière à commander le transfert d'une première puissance électrique depuis ladite entrée (IN1, IN2) vers ledit élément de stockage capacitif (6), et ledit étage d'adaptation de tension (14) comprend un second élément de commutation (16) qui peut être actionné de manière à commander le transfert d'une seconde puissance électrique depuis ledit élément de stockage capacitif (6) vers ladite sortie (OUT),

   **caractérisé en ce qu'**il comprend un étage de commande (12), fonctionnellement couplé audit premier élément de commutation (10) et audit second élément de commutation (16) et configuré pour commander ledit premier élément de commutation (10) et ledit second élément de commutation (16) d'une manière telle que lesdites première et seconde puissances électriques ont des tendances, c'est-à-dire des enveloppes ou des formes d'onde, qui correspondent sensiblement, les deux puissances électriques ayant une forme d'onde définissant un profil correspondant à une sinusoïde mise au carré ($\sin^2$), et que leurs courants correspondants ($I_{C1}$) et ($I_{C2}$) ont une tendance sinusoïdale et, respectivement, une tendance sinusoïdale mise au carré, de sorte que la charge (100) reçoive un courant d'impulsion, à la place d'un courant continu.

2. Système selon la revendication 1, dans lequel ladite tension d'alimentation ($V_{al}$) est une tension d'alimentation sur secteur et ladite charge (100) est une batterie électrique rechargeable ; ladite tension stabilisée ($V_{PFC}$) ayant une première valeur sensiblement constante, et ladite tension de sortie ($V_{OUT}$) ayant une seconde valeur sensiblement constante inférieure à ladite première valeur.

3. Système selon l'une quelconque des revendications précédentes, dans lequel ledit étage de correction de facteur de puissance (4) comprend un premier élément inductif (7), ayant une première borne couplée à ladite entrée (IN1, IN2) et une seconde borne connectée audit premier élément de commutation (10), et ledit étage d'adaptation de tension (14) comprend un second élément inductif (18), ayant une première borne respective connectée audit second élément de commutation (16) et une seconde borne respective connectée à ladite sortie (OUT) ; et dans lequel ledit étage de commande (12) comprend une première boucle de commande interne (21) et une seconde boucle de commande interne (31), configurées pour générer respectivement un premier signal de commande (S1) et un second signal de commande (S2), pour commander respectivement ledit premier élément de commutation (10) et ledit second élément de commutation (16), par la commande respective d'un premier courant de commande ($I_{c1}$), conçu pour circuler dans ledit premier élément inductif (7), et d'un second courant de commande ($I_{c2}$), conçu pour circuler dans ledit second élément inductif (18) ; ladite première boucle de commande interne (21) et ladite seconde boucle de commande interne (31) étant configurées de manière à amener ledit premier courant de commande ($I_{c1}$) et ledit second courant de commande ($I_{c2}$) à prendre, respectivement, une première valeur de courant souhaitée ($I^*_{c1}$) et une seconde valeur de courant souhaitée ($I^*_{c2}$), de sorte que lesdites première et seconde puissances électriques prennent lesdites tendances sensiblement correspondantes.

4. Système selon la revendication 3, dans lequel à ladite première valeur de courant souhaitée ($I^*_{c1}$) est associée une tendance sinusoïdale dudit premier courant de commande ($I_{c1}$), et à ladite seconde valeur de courant souhaitée ($I^*_{c2}$) est associée une tendance présentant le profil d'une sinusoïde mise au carré ($\sin^2$) dudit second courant de commande ($I_{c2}$).

5. Système selon la revendication 3 ou 4, dans lequel ledit étage de commande (12) est configuré de manière à mettre en oeuvre une commande dans un mode courant moyen (ACM) dudit premier courant de commande ($I_{c1}$) et dudit second courant de commande ($I_{c2}$).

6. Système selon l'une quelconque des revendications 3-5, dans lequel ladite première boucle de commande interne (21) et ladite seconde boucle de commande interne (31) sont configurées de manière à :

   échantillonner, à une fréquence d'échantillonnage donnée ($f_c$), ledit premier courant de commande ($I_{c1}$) et, respectivement, ledit second courant de commande ($I_{c2}$), afin d'obtenir une première valeur de courant échantillonné et, respectivement, une seconde valeur de courant échantillonné ; comparer ladite première valeur de courant échantillonné et, respectivement, ladite seconde valeur de courant échantillonné avec ladite première valeur de courant souhaitée ($I^*_{c1}$) et ladite seconde valeur de courant souhaitée ($I^*_{c2}$), afin d'obtenir, respectivement, une première valeur d'erreur de courant ($I_{err1}$) et une seconde valeur d'erreur de courant ($I_{err2}$) ; et traiter lesdites première et seconde valeurs d'erreur de courant ($I_{err1}$, $I_{err2}$) pour générer, respectivement, une première valeur de cycle de service (D1) et une seconde valeur de cycle de service (D2) pour ledit premier signal de commande (S1) et, respectivement, ledit second signal de commande (S2).

7. Système selon l'une quelconque des revendications 3-6, dans lequel ledit étage de commande (12) est configuré de manière à générer ladite première valeur de courant souhaitée ($I^*_{c1}$) et, respectivement, ladite seconde valeur de courant souhaitée ($I^*_{c2}$) en fonction de ladite tension d'alimentation ($V_{a1}$), d'une manière telle qu'elles présentent toutes les deux une tendance synchrone avec ladite tension d'alimentation ($V_{al}$).

8. Système selon l'une quelconque des revendications 3-7, dans lequel ledit étage de commande (12) comprend une première boucle de commande externe (20) et une seconde boucle de commande externe (30), configurées de manière à amener ladite tension stabilisée ($V_{PFC}$) et, respectivement, ladite tension de sortie ($V_{OUT}$) à prendre, respectivement, une première valeur de tension souhaitée ($V^*_{PFC}$) et une seconde valeur de tension souhaitée ($V^*_{OUT}$) et de manière à générer ladite première valeur de courant souhaitée ($I^*_{c1}$) et, respectivement, ladite seconde valeur de courant souhaitée ($I^*_{c2}$).

9. Système selon la revendication 8, dans lequel ladite première boucle de commande externe (20) et ladite seconde boucle de commande externe (30) sont configurées de manière à : échantillonner, à une fréquence d'échantillonnage donnée ($f_c$), ladite tension stabilisée ($V_{PFC}$) et, respectivement, ladite tension de sortie ($V_{OUT}$) afin d'obtenir une première valeur de tension échantillonnée et, respectivement, une seconde valeur de tension échantillonnée ; comparer ladite première valeur de tension échantillonnée et, respectivement, ladite seconde valeur de tension échantillonnée avec ladite première valeur de tension souhaitée ($V^*_{PFC}$) et ladite seconde valeur de tension souhaitée ($V^*_{OUT}$), afin d'obtenir, respectivement, une première valeur d'erreur de tension ($V_{err1}$) et une seconde valeur d'erreur de tension ($V_{err2}$) ; traiter lesdites première et seconde valeurs d'erreur de tension ($V_{err1}$, $V_{err2}$) pour générer, res-

pectivement, un premier courant de compensation requis ($I_{PI1}$) et un second courant de compensation requis ($I_{PI2}$) ; et traiter un produit dudit premier courant de compensation ($I_{PI1}$) et, respectivement, dudit second courant de compensation ($I_{PI2}$) avec un premier signal de modulation ($V_{m1}$) et, respectivement, un second signal de modulation ($V_{m2}$), pour générer ladite première valeur de courant souhaitée ($I^*_{c1}$) et, respectivement, ladite seconde valeur de courant souhaitée ($I^*_{c2}$), dont une valeur moyenne correspond audit premier courant de compensation ($I_{PI1}$) et, respectivement, audit second courant de compensation ($I_{PI2}$).

10. Système selon la revendication 9, dans lequel ledit étage de commande (12) est configuré de manière à : générer ledit premier signal de modulation ($V_{m1}$) à la suite d'un produit d'une valeur normalisée ($\overline{V}_{RECT}$) dudit signal d'alimentation redressé ($V_{RECT}$) par un premier coefficient ($k_3$), de sorte qu'à ladite première valeur de courant souhaitée ($I^*_{c1}$) soit associé un motif sinusoïdal avec une valeur moyenne définie par ledit premier courant de compensation requis ($I_{PI1}$) ; et générer ledit second signal de modulation ($V_{m2}$) à la suite d'un produit de ladite valeur normalisée ($\overline{V}_{RECT}$) dudit signal d' alimentation redressé ($V_{RECT}$), après avoir été mise au carré, par un second coefficient ($k_4$), de sorte qu'à ladite seconde valeur de courant souhaitée ($I^*_{c2}$) soit associé un motif sinusoïdal mis au carré, avec une valeur moyenne définie par ledit second courant de compensation requis ($I_{PI2}$).

11. Système selon la revendication 120, dans lequel ledit premier coefficient ($k_3$) est égal à $2/\pi$, et ledit second coefficient ($k_4$) est égal à 1/2.

12. Système selon l'une quelconque des revendications précédentes, dans lequel ledit étage de commande (12) est configuré de manière à commander la commutation dudit premier élément de commutation (10) et du second élément de commutation (16) avec une période de commutation donnée ($T_c$), et comprend en outre un bloc de synchronisation (40) configuré de manière à être corrélé avec un autre moment de corrélation dudit premier élément de commutation (10) et dudit second élément de commutation (16).

13. Système selon la revendication 12, dans lequel ledit bloc de synchronisation (40) est configuré de manière à augmenter une partie de ladite période de commutation ($T_c$) dans laquelle à l'apport de ladite première puissance électrique audit élément de stockage capacitif (6) par ledit étage de correction de facteur de puissance (4) correspond une absorption de ladite seconde puissance électrique provenant dudit élément de stockage capacitif (6) par ledit étage d'adaptation de tension (14), de manière à réduire une ondulation de tension qui doit être présente sur ledit élément de stockage capacitif (6).

14. Système selon la revendication 13, dans lequel ledit étage de commande (12) est configuré de manière à générer un premier signal de commande (S1) et, respectivement, un second signal de commande (S2) pour commander ledit premier élément de commutation (10) et, respectivement, ledit second élément de commutation (16), ayant un premier cycle de service (D1) et, respectivement, un second cycle de service (D2), d'une manière telle que, dans ladite période de commutation ($T_c$) il y ait une augmentation de l'intervalle de temps dans lequel à un premier niveau dudit premier signal de commande (S1), auquel est associé ledit apport de ladite première puissance électrique audit élément de stockage capacitif (6) par ledit étage de correction de facteur de puissance (4), correspond un second niveau dudit second signal de commande (S2), auquel est associée ladite absorption de ladite seconde puissance électrique provenant dudit élément de stockage capacitif (6) par ledit étage d'adaptation de tension (14).

15. Système selon la revendication 13 ou 14, dans lequel ledit bloc de synchronisation (40) est configuré d'une manière telle que ledit premier signal de commande (S1) a ledit premier niveau pour une première partie de ladite période de commutation ($T_c$), correspondant audit premier cycle de service (D1), en partant d'un instant initial ($T_0$) de ladite période de commutation ($T_c$), et ledit second signal de commande (S2) a ledit premier niveau pour une seconde partie de ladite période de commutation ($T_c$), correspondant audit second cycle de service (D2), en partant d'un instant final de ladite période de commutation ($T_c$), d'une manière telle que lesdites première et seconde parties aient une région de chevauchement réduite.

16. Dispositif de chargeur de batterie pour recharger une batterie (100) depuis le secteur, comprenant un dispositif de conversion de puissance (1), et un système destiné à commander le dispositif de conversion de puissance selon l'une quelconque des revendications précédentes.

17. Procédé destiné à commander un dispositif de conversion de puissance (1), ledit dispositif de conversion de puissance (1) comprenant : un étage de correction de facteur de puissance (4), possédant une entrée (IN1, IN2) conçue pour recevoir une tension d'alimentation (Val) et une sortie (5) connectée à un élément de stockage capacitif (6), et configuré de manière à apporter une tension stabilisée ($V_{PFC}$) sur ledit élément de stockage capacitif (6) en fonction de ladite tension d'alimentation (Val) ; et un étage d'adaptation de tension (14), comportant une entrée respective (5) connectée audit élément de stockage capacitif (6) et une sortie respective (OUT) conçue pour être connectée à une charge (100), et configuré de manière à apporter une tension de sortie ($V_{OUT}$) sur ladite charge (100) en partant de ladite tension stabilisée ($V_{PFC}$) ; dans lequel ledit étage de correction de facteur de puissance (4) comprend un premier élément de commutation (10) qui peut être actionné de manière à commander un transfert d'une première puissance électrique depuis ladite entrée (IN1, IN2) vers ledit élément de stockage capacitif (6), et ledit étage d'adaptation de tension (14) comprend un second élément de commutation (16) qui peut être actionné de manière à commander un transfert d'une seconde puissance électrique depuis ledit élément de stockage capacitif (6) vers ladite sortie (OUT),

**caractérisé en ce qu'**il comprend l'étape consistant à commander ledit premier élément de commutation (10) et ledit second élément de commutation (16) d'une manière telle que lesdites première et seconde puissances électriques ont des tendances, c'est-à-dire des enveloppes ou des formes d'onde, qui correspondent sensiblement, les deux puissances électriques ayant une forme d'onde définissant un profil correspondant à une sinusoïde mise au carré ($sin^2$), et que leurs courants correspondants ($I_{C1}$) et ($I_{C2}$) ont une tendance sinusoïdale et, respectivement, une tendance sinusoïdale mise au carré, de sorte que la charge (100) reçoive un courant d'impulsion, à la place d'un courant continu.

Fig.1

Fig.2

Fig.3a

Fig.3b

**EP 2 365 620 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2008089541 A
- US 5844399 A